# EUROPÄISCHE PATENTSCHRIFT

(11) **EP 1 582 036 B1**
(45) Veröffentlichungstag und Bekanntmachung des Hinweises auf die Patenterteilung: **02.08.2006**
(21) Anmeldenummer: 03702329.8
(22) Anmeldetag: 09.01.2003
(51) Int. Cl.: H04L 12/56

(54) **VERFAHREN UND mOBILFUNKTELEKOMMUNIKATIONSNETZ ZUR ÜBERTRAGUNG VON PAKETDATEN**
METHOD AND MOBILE RADIO COMMUNICATION NETWORK FOR THE TRANSMISSION OF PACKET DATA
PROCEDE ET RESEAU DE RADIOTELEPHONIE MOBILE POUR LA TRANSMISSION DE DONNEES PAR PAQUETS

(43) Veröffentlichungstag der Anmeldung: 05.10.2005
(73) Patentinhaber: SIEMENS AKTIENGESELLSCHAFT, 80333 München (DE)
(72) Erfinder: ANDERSEN, Frank-Uwe, 10625 Berlin (DE); REIMER, Uve, 12683 Berlin (DE)
(86) Internationale Anmeldenummer: PCT/DE2003/000071
(87) Internationale Veröffentlichungsnummer: WO 2004/064337

(56) Entgegenhaltungen:
- EP-A- 1 011 243
- US-B1- 6 233 458

## Beschreibung

Die vorliegende Erfindung betrifft ein Verfahren für ein Mobilfunktelekommunikationsnetz zur Übertragung von Paketdaten zwischen zwei mobilen Kommunikationsendgeräten. In Netzwerken für mobile Kommunikation gibt es mehrere Netzelemente, die bei der Übertragung von Sprachdaten, Multimedia-Daten oder anderen Nutzdaten involviert sind. Die gegenwärtige Architektur von zur Übertragung von Paketdaten geeigneten Mobilfunk-Kommunikationsnetzen, wie beispielsweise in GPRS-und/oder UMTS-Netzen ist unter anderem dadurch gekennzeichnet, dass es einen zentralen Übergangspunkt, im Falle eines GPRS-Netzes beispielsweise einen sogenannten GGSN, der eine Anbindung an ein Paketdatennetz, wie beispielsweise das Internet gewährleistet gibt. Zwischen einem mobilen Kommunikationsendgerät und dem zentralen Übergangspunkt werden Teilnehmerdaten getunnelt, um die Mobilität des mobilen Kommunikationsendgerätes zu unterstützen. Einem bestimmten räumlichen Gebiet, einer sogenannten Routing Area ist genau ein Steuernetzknoten zugeordnet, im Falle eines GPRS-Netzes ein sogenannter SGSN, der die Mobilität eines mobilen Kommunikationsendgerätes kontrolliert. Hinsichtlich Aufbau und Behandlung von logischen Verbindungen, wie beispielsweise PDP-Kontexten, sind die Netze für sogenannte Client-Server-Dienste optimiert. Bei dieser Art der Kommunikation kommunizieren grundsätzlich mehrere Teilnehmer bzw. Clients von beliebigen Orten aus, beispielsweise sternförmig mit einem zentralen, der auflaufenden Last angepassten Server. Ein weiteres Kennzeichen ist die stark asymmetrische Verkehrscharakteristik. Es kommt zu sehr wenig Verkehr vom Teilnehmer bzw. Client zum Server, umgekehrt vom Server zum Teilnehmer erfolgt vergleichsweise viel Verkehr. Ein gewohntes Szenario ist dabei beispielsweise ein DatenVerkehr zwischen einem mobilen Kommunikationsendgerät und einem Ziel, das außerhalb des eigentlichen Mobilfunktelekommunikationsnetzes, das heißt hinter dem zentralen Übergangspunkt liegt, wie beispielsweise ein Host im Internet oder ein WAP-GW.

Ein Beispiel ist aus dem Document US 6,233,458 bekannt.

Demnach sind Mobilfunk-Kommunikationsnetze nicht für Anwendungen geeignet, die Daten von einem mobilen Kommunikationsendgerät zu einem anderen mobilen Kommunikationsendgerät schicken. Man bezeichnet eine derartige direkte Datenübertragung von einem Nutzer zu einem anderen Nutzer als "Peer-to-Peer"- bzw- P2P-Übertragung. Gegenwärtig wird insbesondere im Internet jedoch ein überproportionales Wachstum im Datenaufkommen gerade bei den sogenannten P2P-Diensten verzeichnet. Ein anzuführendes Beispiel sind beispielsweise die Tauschbörsen für Musik- und Videöclips, die auf dem direkten Datenaustausch zwischen Nutzern beruhen.

Bei einem steigenden Funktionsumfang von mobilen Kommunikationsendgeräten, wie beispielsweise von Digital-Kameras, MP3-Players oder Multimedia-Cards, ist auch bei den mobilen Nutzern bzw. den sogenannten mobilen Subscribern, ein ähnliches Nutzerverhalten zu erwarten. Im Gegensatz zu einfachen Text-Nachrichten und Klingeltönen, die sich gut mittels eines sogenannten Short Message Service, d.h. einer SMS verschicken lassen, wird dabei das durch das Versenden von beispielsweise Audio-, Still Picture-Dateien oder Datenströmen verursachte Datenaufkommen exponentiell wachsen. Aus Sicht eines Netzbetreibers wird es somit zunehmend attraktiv, Daten bei einem derartigen Szenario möglichst direkt und damit kostensparend zu routen.

Es ist somit eine Aufgabe der vorliegenden Erfindung, sogenannte P2P-Dienste in Mobilfunk-Kommunikationsnetzen, insbesondere in GPRS- bzw. UMTS-Netzen besser zu unterstützen und in besonders häufig auftretenden Situationen das Routing von Paketdaten zu optimieren.

Gelöst wird diese Aufgabe durch ein Verfahren gemäß Anspruch 1 und durch ein Mobilfunk-Kommunikationsnetz gemäß Anspruch 4. Weitere bevorzugte Ausführungsformen sind in den Unteransprüchen aufgeführt.

Gemäß Anspruch 1 wird ein Verfahren zur Steuerung eines Datenaustausches zwischen mobilen Teilnehmern in einem paket-orientierten Mobilfunk-Kommunikationsnetz bereitgestellt, wobei
- jeder Teilnehmer in Abhängigkeit von seinem jeweils aktuellen Aufenthaltsort in dem Mobilfunk-Kommunikationsnetz in einem bestimmten Steuernetzknoten (SGSN) des Mobilfunk-Kommunikationsnetzes verwaltet wird,
- Verbindungen von/zu einem mobilen Kommunikationsendgerät des mobilen Teilnehmers innerhalb des Mobilfunk-Kommunikationsnetzes durch den entsprechenden Steuernetzknoten gesteuert werden,
bei dem
- in dem Steuernetzknoten ein Adressenregister mit allen den von dem Steuernetzknoten verwalteten mobilen Teilnehmern zugeordneten Adressen gespeichert wird,
- in dem Steuernetzknoten aus ankommenden Datenpaketen eine den Datenpaketen zugeordnete Zieladresse ausgelesen und mittels einer Suchfunktion mit dem Adressenregister verglichen wird,
- bei Vorhandensein der Zieladresse in dem Adressenregister die Datenpakete innerhalb des Mobilfunk-Kommunikationsnetzes ausschließlich durch den Steuernetzknoten behandelt und weitergeleitet werden,
- bei Fehlen der Zieladresse in dem Adressenregister die Datenpakete von dem Steuernetzkonten zur Weiterbehandlung an einen weiteren Netzknoten (GGSN) des Mobilfunk-Kommunikationsnetzes geleitet werden.

Bekannt ist, wie bereits erwähnt, dass Teilnehmer-Datenpakete, die das Mobilfunk-Kommunikationsnetz transparent, also getunnelt, durchlaufen erst hinter dem zentralen Übergangspunkt, im Falle eines GPRS-Netzes beispielsweise hinter dem GGSN, d.h. hinter dem Tunnelendpunkt sichtbar werden. Von diesem zentralen Übergangspunkt aus, werden dann die Datenpakete mittels eines konventionellen Routings zu einer entsprechend angegebenen Zieladresse transportiert. Von einem ersten mobilen Kommunikationsendgerät wird beispielsweise ein Datenpaket über eine Kontrolleinheit, im Falle eines UMTS-Netzes beispielsweise über einen Radio Network Controller (RNC), einen Steuernetzknoten, wie beispielsweise einen SGSN bis zu dem zentralen Übergangspunkt, wie beispielsweise einem GGSN getunnelt. Im zentralen Übergangsknoten wird dann das ankommende Datenpaket ausgepackt bzw. dekapsuliert und anschließend geroutet. Handelt es sich bei der Zieladresse um ein anderes zweites mobiles Kommunikationsendgerät, so wird das Datenpaket zu demjenigen zentralen Übergangsknoten geroutet, der einen Tunnel zu dem zweiten mobilen Kommunikationsendgerät verwaltet. Dort wird das Datenpaket wieder eingepackt bzw. enkapsuliert und schließlich über einen Steuernetzknoten, wie beispielsweise einen SGSN, und eine Kontrolleinheit, wie beispielsweise einen Radio Network Controller (RNC) zu der Zieladresse, d.h. zu dem zweiten mobilen Kommunikationsendgerät getunnelt.

Ein Austausch von Multimedia-Inhalten zwischen zwei mobilen Kommunikationsendgeräten konnte bislang beispielsweise über einen sogenannten Multimedia Message Service (MMS) laufen. Bei diesem Dienst gibt es ein sogenanntes Multimedia Message Service Center (MMSC), welches bei Anwendung des sogenannten "store-and-forward"-Prinzips als Zwischenspeicher fungiert. Bei diesem Dienst werden die Datenpakete, die von einem mobilen Kommunikationsendgerät zu einem anderen mobilen Kommunikationsendgerät gesendet werden sollen, im Allgemeinen über räumlich weit entfernte Netzknoten geleitet, selbst wenn die mobilen Kommunikationsendgeräte örtlich nahe beieinander liegen. Die Folge sind unnötig hohe Latenzzeiten sowie eine unnötige Belastung des Netzes, wo sonst zusätzliche Paketdaten transportiert werden könnten.

Ein Vorteil der vorliegenden Erfindung ist es nun, dass, wenn die Daten austauschenden mobilen Kommunikationsendgeräte örtlich nahe beieinander liegen und von daher durch denselben Steuernetzknoten, im Falle eines GPRS-Netzes beispielsweise durch denselben SGSN verwaltet werden, das Routing dieser Datenpakete optimiert wird. Durch die im Steuernetzknoten erfindungsgemäß vorgesehene Suchfunktion werden relevante Datenpakete erkannt und unter Umgehung eines weiteren Netzknotens, wie im Falle eines GPRS-Netzes beispielsweise eines GGSNs, ausschließlich durch den Steuernetzknoten, wie beispielsweise den SGSN, behandelt. Ein signifikanter Anteil des Datenverkehrs zwischen zwei mobilen Kommunikationsendgeräten wird durch Nutzer hervorgerufen, die räumlich beieinander sind, wie beispielsweise beim Austausch von Klingeltönen, Logos oder MP3-Daten zwischen Freunden oder Bekannten. Erfindungsgemäß wird in diesen Fällen der Datenverkehr im sogenannten backbone des Mobilfunk-Kommunikationsnetz, wie beispielsweise im GPRS-backbone zwischen einem SGSN und einem GGSN stark reduziert. Immer wenn ein Datenpaket mit einer Zieladresse versehen ist, die in dem Adressenregister des Steuernetzknoten abgelegt ist, wird dies durch die erfindungsgemäße Suchfunktion erkannt und das somit als relevant erkannte Datenpaket wird erfindungsgemäß nur noch durch den Steuernetzknoten behandelt und weitergeleitet. Ein Umweg über einen weiteren Netzknoten wird damit erfindungsgemäß vermieden. Ist die Zieladresse nicht in dem Adressenregister des Steuernetzknoten vorhanden, so wird das Datenpaket von dem Steuernetzknoten zu einem weiteren Netzknoten des Netzes weitergeleitet, wie beispielsweise zu einem GGSN in einem GPRS-Netz, der sich dann verantwortlich dafür zeigt, das Datenpaket zu seiner Zieladresse zu leiten.

In einer besonders bevorzugten Ausführungsform des erfindungsgemäßen Verfahrens wird als Adressenregister eine sogenannte Hashing-Tabelle mit einer Hash-Funktion gewählt, um möglichst schnell entscheiden zu können, ob ein ankommendes IP-Paket lokal oder über den GGSN weitergeleitet werden soll. Die Hashing-Tabelle besteht aus einer Liste von Einträgen, die nur einen Binärwert "1" oder "0" enthalten. Das Ordnungskriterium, d.h. die Adresse in der Tabelle wird direkt über die Hash-Funktion berechnet. Dies erfolgt durch Umsetzung der IP Adresse in ihren 32- bzw. 128 bit-Wert, mit dem direkt auf die Tabelle zugegriffen werden kann. Ergibt der Test mit der Zieladresse eines am SGSN ankommenden IP Paketes beispielsweise den Wert "1", so signalisiert dies das Vorliegen eines lokalen Ziels, d.h. der Kommunikationspartner ist am selben SGSN angemeldet wie der Absender des IP Paketes und erfindungsgemäß behandelt dann ausschließlich der SGSN das Weiterleiten des IP Paketes. Ergibt der Test den Wert "0", so muss das IP Paket über den GGSN geleitet werden. Die Tabelle wird während der PDP Kontext Behandlung aktualisiert. Hierzu wird bei jedem Kontextauf- bzw. abbau oder -modifikation die IP Adresse des jeweiligen Teilnehmers in der Tabelle auf den jeweiligen Wert gesetzt, das heißt beispielsweise auf "1" für "lokal vorhanden" und "0" für "nicht vorhanden".

Vorzugsweise wird als Mobilfunk-Kommunikationsnetz ein GPRS- oder ein UMTS-Netz gewählt.

Ferner umfasst die vorliegende Erfindung ein Mobilfunk-Kommunikationsnetz mit mindestens einem Steuernetzknoten, in welchem mobile Teilnehmer des Mobilfunk-Kommunikationsnetzes in Abhängigkeit von deren aktuellem Aufenthaltsort verwaltet und Verbindungen von/zu einem Kommunikationsendgerät eines in dem Steuernetzknoten verwalteten mobilen Teilnehmers innerhalb des Mobilfunk-Kommunikationsnetzes gesteuert werden, wobei in dem Steuernetzknoten eine Filterfunktion vorgesehen ist, mit deren Hilfe ankommende Datenpakete in Abhängigkeit einer in den Datenpaketen jeweils angegebenen Zieladresse ausgefiltert werden.

Vorzugsweise ist in dem Steuernetzknoten eine Tabelle vorgesehen, in welcher alle von dem Steuernetzknoten verwaltete Teilnehmer mit den Teilnehmern entsprechend zugeordneten Adressen verzeichnet sind. Anhand dieser Tabelle ist vorzugsweise durch die Filterfunktion ein Vergleich einer in einem Datenpaket angegebenen Zieladresse mit den in der Tabelle verzeichneten, den Teilnehmern entsprechend zugeordneten Adressen durchführbar.

In einer besonders bevorzugten Ausführungsform des erfindungsgemäßen Mobilfunk-Kommunikationsnetzes ist in dem Steuernetzknoten eine Routing-Funktion vorgesehen, mit deren Hilfe ausgewählte Datenpakete mit einer Zieladresse unter Umgehung anderer Netzknoten zu dieser Zieladresse geleitet werden können.

In einer besonders bevorzugten Ausführungsform des erfindungsgemäßen Mobilfunk-Kommunikationsnetzes sind in dem Steuernetzknoten die Filterfunktion und die Routingfunktion derart gekoppelt, dass die durch die Filterfunktion in Abhängigkeit einer in den Datenpaketen jeweils angegebenen Zieladresse ausgefilterten Datenpakete durch die Routingfunktion unter Umgehung anderer Netzknoten zu der jeweiligen Zieladresse weitergeleitet werden können. Das bedeutet, dass wenn die Zieladresse eines in dem Steuernetzknoten ankommenden Datenpaketes in dem Adressenregister des Steuernetzknotens vorhanden ist und dies demnach durch die Filterfunktion des Steuernetzknotens erkannt wird, so wird dieses Datenpaket mittels der in dem Steuernetzknoten vorgesehenen Routing-Funktion unmittelbar unter Umgehung anderer Netzknoten, wie beispielsweise eines GGSNs in einem GPRS-Netz, zu der Zieladresse geleitet. Damit können Zeit und Kosten eingespart werden.

Erfindungsgemäß werden somit sogenannte Peer-to-Peer-Dienste bzw. P2P-Dienste in Analogie zur Entwicklung im Internet auch in einem Mobilfunk-Kommunikationsnetz unterstützt. Mittels der Erfindung können sowohl der Operator als auch Mobilfunkteilnehmer, die von demselben Steuernetzknoten verwaltet werden, von der geographischen Nähe profitieren. Für einen Operator ergibt sich eine niedrigere Last im Netz zwischen dem SGSN und dem GGSN, für einen Mobilfunkteilnehmer niedrigere Latenzzeiten und demnach niedrigere Gebühren.

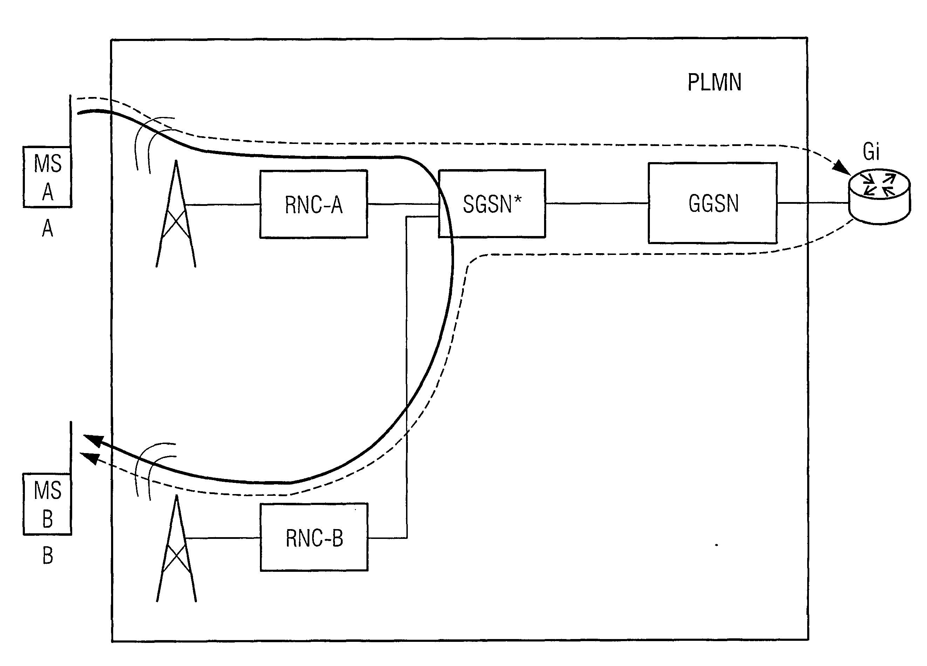

Weitere Vorteile werden anhand der folgenden Figur aufgezeigt. Es zeigt
Fig. 1 Schematische Darstellung einer Ausführungsform des erfindungsgemäßen Verfahrens am Beispiel eines GPRS-Netzes

In Figur 1 ist eine Ausführungsform des erfindungsgemäßen Verfahrens am Beispiel eines GPRS-Netzes dargestellt. Von dem GPRS-Netz ist im vorliegenden Beispiel ein Radio Network Controller RNC-A, der für den Netzzugang eines Mobilfunkteilnehmers A mit dessen mobilem Kommunikationsendgerät MS A zuständig ist, ein Steuerknoten SGSN, der aufgrund örtlicher Nähe sowohl den Mobilfunkteilnehmer A mit dessen mobilem Kommunikationsendgerät MS A sowie einen in der Nähe befindlichen weiteren Mobilfunkteilnehmer B mit dessen mobilem Endgerät MS B verwaltet, ein GGSN, der im vorliegenden Fall sowohl für A als auch für B als zentraler Übergangspunkt zur Anbindung an ein Paketdatennetz dient, in den Standards als logischer Referenzpunkt Gi bezeichnet und ein zweiter Radio Network Controller RNC-B, der für den Netzzugang des Teilnehmers B zuständig ist, dargestellt. Ein Mobilfunkeilnehmer A möchte nun mittels seines mobilen Kommunikationsendgerätes MS A eine Verbindung zu einem Mobilfunkteilnehmer B bzw. zu dessen mobilen Kommunikationsendgerät MS B aufbauen und darüber Datenpakete senden. Ein von A bzw. von MS A ausgehendes Datenpaket beinhaltet eine Zieladresse, nämlich in dem dargestellten Fall die Adresse des Teilnehmers B bzw. von MS B. Bekannt ist es nun, was in Figur 1 durch die gestrichelte Linie angedeutet ist, dass das Datenpaket von der MS A über den Radio Network Controller RNC-A, den SGSN zu dem GGSN getunnelt wird. Im RNC-A wird das Datenpaket in einen entsprechenden IP-Tunnel enkapsuliert. Das bedeutet, dass das Datenpaket bis zum GGSN transparent behandelt wird. Logisch gesehen erst hinter dem GGSN, nämlich in dem Referenzpunkt Gi wird das Datenpaket ausgepackt, d.h. dekapsuliert und von dort anhand der in dem Datenpaket hinterlegten Zieladresse eben zu dieser Zieladresse geroutet bzw. geleitet. Das bedeutet im vorliegenden Fall, wo sich der Zieladressat, nämlich der Teilnehmer B örtlich nahe bei dem Teilnehmer A befindet, dass ausgehend von dem Referenzpunkt Gi das Datenpaket nun wieder zurückgesendet wird zu demselben GGSN, dort wieder verpackt, d.h. enkapsuliert wird und von dort zu demselben SGSN, der sowohl A wie auch B verwaltet, geleitet wird. Von dem SGSN wird das Datenpaket dann zu RNC-B und letztlich zu MS B geleitet. Die Strecke zwischen SGSN und GGSN sowie zwischen GGSN und beispielsweise einem externen Router, der am Referenzpunkt Gi angeschlossen ist, wird dabei jeweils zweimal durchlaufen, was für den angestrebten Vorgang, nämlich das Schicken eines Datenpaketes von A zu B unnötig ist. Erfindungsgemäß verfügt nun der SGSN über eine Adressentabelle, eine Suchfunktion und eine Routingfunktion. In der Tabelle wird jedem in dem SGSN verwalteten Teilnehmer die ihm während des Aufbaus eines PDP-Kontextes zugewiesene IP-Adresse zugeordnet. Die Tabelle ist dabei so aufgebaut, dass mittels der Suchfunktion und der in dem ankommenden Datenpaket hinterlegten Zieladresse sehr schnell festgestellt werden kann, ob die Zieladresse in der Tabelle enthalten ist oder nicht. Ist die Zieladresse des Teilnehmers B in der Tabelle enthalten, wie dies in dem vorliegenden Beispiel der Fall ist, so liest die Suchfunktion die den physikalischen Link bezeichnende Interface-Kennung des den Teilnehmers B behandelnden RNC-B aus, und das Datenpaket wird direkt über dieses Interface zum RNC-B geschickt. Durch die Behandlung der Datenpakete an der Schnittstelle zum Radio Access Netz wird der GGSN umgangen. Auf diese Weise ermöglicht die die Zieladressen bewertende Such- bzw. Filter-funktion des SGSN in Verbindung mit dem Adressenregister bzw. der Tabelle aller zum jeweiligen Zeitpunkt von diesem SGSN verwalteten Teilnehmer bzw. deren IP Adressen ein optimiertes Routing für die zu sendenden Datenpakete zwischen allen zum jeweiligen Zeitpunkt von diesem SGSN verwalteten Teilnehmern.

## Patentansprüche

1. Verfahren zur Steuerung eines Datenaustausches zwischen mobilen Teilnehmern (A, B) in einem paket-orientierten Mobil-Kommunikationsnetz, wobei
- jeder Teilnehmer (A, B) in Abhängigkeit von seinem jeweils aktuellen Aufenthaltsort in dem Mobil-Kommunikationsnetz in einem bestimmten Steuernetzknoten (SGSN) des Mobil-Kommunikationsnetzes verwaltet wird,
- Verbindungen von/zu einem mobilen Kommunikationsendgerät des mobilen Teilnehmers (A, B) innerhalb des Mobil-Kommunikationsnetzes durch den entsprechenden Steuernetzknoten gesteuert (SGSN) werden,
bei dem
- in dem Steuernetzknoten (SGSN) ein Adressenregister mit allen den von dem Steuernetzknoten (SGSN) verwalteten mobilen Teilnehmern (A, B) zugeordneten Adressen gespeichert wird,
- in dem Steuernetzknoten (SGSN) aus ankommenden Datenpaketen eine den Datenpaketen zugeordnete Zieladresse ausgelesen und mittels einer Suchfunktion mit dem Adressenregister verglichen wird,
- bei Vorhandensein der Zieladresse in dem Adressenregister die Datenpakete innerhalb des Mobil-Kommunikationsnetzes ausschließlich durch den Steuernetzknoten (SGSN) behandelt und weitergeleitet werden,
- bei Fehlen der Zieladresse in dem Adressenregister die Datenpakete von dem Steuernetzknoten (SGSN) zur Weiterbehandlung an einen weiteren Netzknoten (GGSN) des Mobil-Kommunikationsnetzes geleitet werden.

2. Verfahren nach Anspruch 1,
**dadurch gekennzeichnet,**
**dass** als Adressenregister eine sogenannte Hashing-Tabelle mit einer Hash-Funktion gewählt wird.

3. Verfahren nach einem der Ansprüche 1 oder 2,
**dadurch gekennzeichnet,**
**dass** als Mobilfunk-Kommunikationsnetz ein GPRS- oder ein UMTS-Netz gewählt wird.

4. Mobilfunk-Kommunikationsnetz mit mindestens einem Steuernetzknoten (SGSN), in welchem mobile Teilnehmer (A, B) des Mobilfunk-Kommunikationsnetzes in Abhängigkeit von deren aktuellem Aufenthaltsort verwaltet und Verbindungen von/zu einem Kommunikationsendgerät eines in dem Steuernetzknoten (SGSN) verwalteten mobilen Teilnehmers (A, B) innerhalb des Mobilfunk-Kommunikationsnetzes gesteuert werden,
**dadurch gekennzeichnet,**
**dass** in dem Steuernetzknoten (SGSN) eine Filterfunktion vorgesehen ist, mit deren Hilfe ankommende Datenpakete in Abhängigkeit einer in den Datenpaketen jeweils angegebenen Zieladresse ausgefiltert werden.

5. Mobilfunk-Kommunikationsnetz nach Anspruch 4,
**dadurch gekennzeichnet,**
**dass** in dem Steuernetzknoten (SGSN) eine Tabelle vorgesehen ist, in welcher alle von dem Steuernetzknoten (SGSN) verwaltete Teilnehmer (A, B) mit den den Teilnehmern entsprechend zugeordneten Adressen verzeichnet sind.

6. Mobilfunk-Kommunikationsnetz nach Anspruch 5,
**dadurch gekennzeichnet,**
**dass** durch die Filterfunktion ein Vergleich einer in einem Datenpaket angegebenen Zieladresse mit den in der Tabelle verzeichneten, den Teilnehmern entsprechend zugeordneten Adressen durchführbar ist.

7. Mobilfunk-Kommunikationsnetz nach einem der Ansprüche 4 bis 6,
**dadurch gekennzeichnet,**
**dass** in dem Steuernetzknoten (SGSN) eine Routing-Funktion vorgesehen ist, mit deren Hilfe ausgewählte Datenpakete mit einer Zieladresse unter Umgehung anderer Netzknoten zu der Zieladresse geleitet werden können.

8. Mobilfunk-Kommunikationsnetz nach einem der Ansprüche 4 bis 7,
**dadurch gekennzeichnet,**
**dass** in dem Steuernetzknoten (SGSN) die Filterfunktion und die Routingfunktion derart gekoppelt sind, dass die durch die Filterfunktion in Abhängigkeit einer in den Datenpaketen jeweils angegebenen Zieladresse ausgefilterten Datenpakete durch die Routingfunktion unter Umgehung anderer Netzknoten zu der jeweiligen Zieladresse weitergeleitet werden.

## Claims

1. Method for controlling data interchange between mobile subscribers (A, B) in a packet-oriented mobile communication network, where
- each subscriber (A, B) is managed at a particular control network node (SGSN) in the mobile communication network on the basis of his respective current location in the mobile communication network,
- connections from/to a mobile communication terminal associated with the mobile subscriber (A, B) are controlled within the mobile communication network by the appropriate control network node (SGSN),
in which
- the control network node (SGSN) stores an address register containing all of the addresses associated with the mobile subscribers (A, B) managed by the control network node (SGSN),
- the control network node (SGSN) takes incoming data packets and reads a destination address associated with the data packets, and uses a search function to compare said destination address with the address register,
- if the destination address is present in the address register then the data packets are handled and forwarded within the mobile communication network exclusively by the control network node (SGSN),
- if the destination address is absent from the address register then the data packets are routed from the control network node (SGSN) to a further network node (GGSN) in the mobile communication network for the purpose of further handling.

2. Method according to Claim 1,
**characterized**
**in that** the address register chosen is a "hashing table" with a hash function.

3. Method according to either of Claims 1 and 2,
**characterized**
**in that** the mobile radio communication network chosen is a GPRS or UMTS network.

4. Mobile radio communication network having at least one control network node (SGSN), at which mobile subscribers (A, B) in the mobile radio communication network are managed on the basis of their current location and connections from/to a communication terminal associated with a mobile subscriber (A, B) managed at the control network node (SGSN) are controlled within the mobile radio communication network,
**characterized**
**in that** the control network node (SGSN) contains a filter function which is used to filter incoming data packets on the basis of a destination address which is respectively indicated in the data packets.

5. Mobile radio communication network according to Claim 4,
**characterized**
**in that** the control network node (SGSN) contains a table which records all subscribers (A, B) managed by the control network node (SGSN) with the addresses appropriately associated with the subscribers.

6. Mobile radio communication network according to Claim 5,
**characterized**
**in that** the filter function is able to perform a comparison between a destination address indicated in a data packet and the table's recorded addresses appropriately associated with the subscribers.

7. Mobile radio communication network according to one of Claims 4 to 6,
**characterized**
**in that** the control network node (SGSN) contains a routing function which can be used to route selected data packets with a destination address to the destination address by bypassing other network nodes.

8. Mobile radio communication network according to one of Claims 4 to 7,
**characterized**
**in that** the control network node (SGSN) contains the filter function and the routing function coupled to one another such that the data packets filtered out by the filter function on the basis of a destination address respectively indicated in the data packets are forwarded to the respective destination address by the routing function by bypassing other network nodes.

## Revendications

1. Procédé pour la commande d'un échange de données entre des abonnés mobiles (A, B) dans un réseau de communication mobile orienté paquets,
- chaque abonné (A, B) étant géré en fonction de son lieu de séjour respectivement actuel dans le réseau de communication mobile dans un certain noeud de réseau de commande (SGSN) du réseau de communication mobile,
- des liaisons de ou vers un terminal de communication mobile de l'abonné mobile (A, B) à l'intérieur du réseau de communication mobile étant commandées par le noeud de réseau de commande (SGSN) correspondant,
dans lequel
- dans le noeud de réseau de commande (SGSN), on mémorise un registre d'adresses avec toutes les adresses associées aux abonnés mobiles (A, B) gérés par le noeud de réseau de commande (SGSN),
- dans le noeud de réseau de commande (SGSN), on lit une adresse de destination associée aux paquets de données dans les paquets de données entrants et on la compare au registre d'adresses au moyen d'une fonction de recherche,
- si l'adresse de destination est présente dans le registre d'adresses, les paquets de données à l'intérieur du réseau de radiocommunication mobile sont traités et retransmis exclusivement par le noeud de réseau de commande (SGSN),
- si l'adresse de destination est absente du registre d'adresses, les paquets de données sont conduits par le noeud de réseau de commande (SGSN) pour la suite du traitement vers un autre noeud de réseau (GGSN) du réseau de communication mobile.

2. Procédé selon la revendication 1,
**caractérisé par le fait que** l'on choisit comme registre d'adresses une table dite de hachage avec une fonction de hachage.

3. Procédé selon l'une des revendications 1 ou 2,
**caractérisé par le fait que** l'on choisit comme réseau de radiocommunication mobile un réseau GPRS ou un réseau UMTS.

4. Réseau de radiocommunication mobile avec au moins un noeud de réseau de commande (SGSN) dans lequel des abonnés mobiles (A, B) du réseau de radiocommunication mobile sont gérés en fonction de leur lieu de séjour actuel et dans lequel des liaisons de ou vers un terminal de communication d'un abonné mobile (A, B) géré dans le noeud de réseau de commande (SGSN) à l'intérieur du réseau de radiocommunication mobile sont commandées,
**caractérisé par le fait qu'**il est prévu dans le noeud de réseau de commande (SGSN) une fonction de filtrage à l'aide de laquelle des paquets de données arrivants sont filtrés en fonction d'une adresse de destination indiquée respectivement dans les paquets de données.

5. Réseau de radiocommunication mobile selon la revendication 4,
**caractérisé par le fait qu'**il est prévu dans le noeud de réseau de commande (SGSN) une table dans laquelle sont notés tous les abonnés (A, B) gérés par le noeud de réseau de commande (SGSN) avec les adresses associées de manière appropriée aux abonnés.

6. Réseau de radiocommunication mobile selon la revendication 5,
**caractérisé par le fait que** la fonction de filtrage permet d'effectuer une comparaison d'une adresse de destination indiquée dans un paquet de données aux adresses notées dans la table et associées de manière appropriée aux abonnés.

7. Réseau de radiocommunication mobile selon l'une des revendications 4 à 6,
**caractérisé par le fait qu'**il est prévu dans le noeud de réseau de commande (SGSN) une fonction d'acheminement à l'aide de laquelle des paquets de données sélectionnés ayant une certaine adresse de destination peuvent être conduits à l'adresse de destination en évitant d'autres noeuds de réseau.

8. Réseau de radiocommunication mobile selon l'une des revendications 4 à 7,
**caractérisé par le fait que** la fonction de filtrage et la fonction d'acheminement sont couplées de telle sorte dans le noeud de réseau de commande (SGSN) que les paquets de données extraits par la fonction de filtrage en fonction d'une adresse de destination respectivement indiquée dans les paquets de données sont retransmis par la fonction d'acheminement vers l'adresse de destination respective en évitant d'autres noeuds de réseau.
